# EUROPEAN PATENT APPLICATION

(11) **EP 2 535 859 A1**
(43) Date of publication of application: **19.12.2012**
(21) Application number: 10845773.0
(22) Date of filing: 13.07.2010
(51) Int. Cl.: G06Q 50/00

(54) **MAINTENANCE PLAN FORMULATION SYSTEM, MAINTENANCE PLAN FORMULATION DEVICE, CONTROL METHOD, AND RECORDING MEDIUM**

(30) Priority: 12.02.2010 JP 2010028868
(71) Applicant: Mitsubishi Heavy Industries, Ltd., Tokyo 108-8215 (JP)
(72) Inventor: TSURU Yasuhiko, Tokyo 108-8215 (JP); KAWAGUCHI Masataka, Tokyo 108-8215 (JP); ENOMOTO Kiyoshi, Tokyo 108-8215 (JP)
(74) Representative: Henkel, Breuer & Partner
(86) International application number: PCT/JP2010/061834
(87) International publication number: WO 2011/099181

(57) **Abstract**

The disclosed maintenance plan formulation system formulates a plan for maintaining industrial machinery that is for performing a specific task. The aforementioned maintenance plan formulation system has a first measurement means, a second measurement means, and a maintenance plan formulation device. The aforementioned first measurement means measures the value of information that changes by means of the aforementioned industrial machinery performing an operation for a specific task. The aforementioned second measurement means measures the value of information that changes by means of the aforementioned industrial equipment performing an operation for a purpose other than the specific task. The aforementioned maintenance plan formulation device formulates a plan for maintaining the aforementioned industrial machinery on the basis of the values of the information measured by the aforementioned first measurement means and the aforementioned second measurement means.

## Description

### Technical Field

The present invention relates to a maintenance plan formulation system, a maintenance plan formulation device, a control method, and a recording medium. Particularly, the invention relates to a maintenance plan formulation system formulating a plan for maintaining an industrial machine used to conduct a specific operation, a maintenance plan formulation device formulating a plan for maintaining an industrial machine, a control method of controlling the maintenance plan formulation device, and a recording medium for the maintenance plan formulation device.
Priority is claimed on Japanese Patent Application No. 2010-028868, filed February 12, 2010, the content of which is incorporated herein by reference.

### Background Art

A management system managing operating machines all over the world, estimating the cause of breakdown, and predicting the breakdown is known (for example, Patent Document 1). In this system, an arithmetic processing unit prepares a reference value database used to predict the breakdown on the basis of data hitherto accumulated in an activation database and a repair database, compares activation data periodically received from the industrial machines with the reference value database to predict the breakdown, and formulates a maintenance plan for preventing the breakdown.

### Prior Art Documents

### Patent Documents

Patent Documents 1: Japanese Unexamined Patent Application Publication No. 2000-259729

### Summary of Invention

### Problem to be Solved by the Invention

In the management system of operating machines described in Patent Document 1, the arithmetic processing unit compares the activation data periodically received from the operating machines with the reference value database to predict the breakdown and formulates a maintenance plan for preventing the breakdown. However, in this system, the activation data periodically received from the operating machines is simply compared with the activation data to formulate the maintenance plan. Accordingly, unless it is determined that the activation data is abnormal or an item close to an abnormal range is extracted, it is not possible to formulate a significant maintenance plan.

### Means for Solving the Problem

According to a first embodiment of the invention, there is provided a maintenance plan formulation system formulating a plan for maintaining an industrial machine used to conduct a specific operation, including: first measuring means for measuring a value of information which varies by causing the industrial machine to operate for a specific job; second measuring means for measuring a value of information which varies by causing the industrial machine to operate for a job other than the specific job; and a maintenance plan formulation device that formulates a plan for maintaining the industrial machine on the basis of the values of information measured by the first measuring means and the second measuring means, wherein the maintenance plan formulation device includes: a first parameter calculating unit that calculates a parameter indicating a degree to which the industrial machine has been operated for the specific job on the basis of the value of information measured by the first measuring means; a second parameter calculating unit that calculates a parameter indicating a degree to which the industrial machine has been operated for a job other than the specific job on the basis of the value of information measured by the second measuring means; a type classifying unit that classifies a tendency of the tendency of a utilization form of the industrial machine into one type of a plurality of predetermined types on the basis of the parameters calculated by the first parameter calculating unit and the second parameter calculating unit; and a maintenance plan formulating unit that formulates a plan for maintaining the industrial machine according to the type classified by the type classifying unit.

The first parameter calculating unit may calculate a variation of the value per unit time as the parameter indicating the degree to which the industrial machine has been operated for the specific job on the basis of a period of time passing after the industrial machine is finally checked and a variation of the value measured by the first measuring means in the period of time.

The second parameter calculating unit may calculate a variation of the value per unit time as the parameter indicating the degree to which the industrial machine has been operated for a job other than the specific job on the basis of a period of time passing after the industrial machine is finally checked and a variation of the value measured by the second measuring means in the period of time.

The type classifying unit may classify the tendency of the utilization form of the industrial machine into one type of a heavily-operating type in which a frequency of operation for the specific job is high and a lightly-operating type in which a frequency of operation for the job other than the specific job is high on the basis of the parameters calculated by the first parameter calculating unit and the second parameter calculating unit.

The type classifying unit may classify the tendency of the utilization form of the industrial machine into the heavily-operating type when the parameter calculated by the first parameter calculating unit is equal to or more than a threshold value and the parameter calculated by the second parameter calculating unit is equal to or less than a threshold value.

The type classifying unit may classify the tendency of the utilization form of the industrial machine into the lightly-operating type when the parameter calculated by the first parameter calculating unit is equal to or less than a threshold value and the parameter calculated by the second parameter calculating unit is equal to or more than a threshold value.

The type classifying unit may classify the tendency of the utilization of the utilization form of the industrial machine into one type of a highly-activated type in which both the frequency of operation for the specific job and the frequency of operation for the job other than the specific job are high and a low-activated type in which both the frequency of operation for the specific job and the frequency of operation of the job other than the specific job are low in addition to the heavily-operating type and the lightly-operating type on the basis of the parameters calculated by the first parameter calculating unit and the second parameter calculating unit.

The type classifying unit may classify the tendency of the utilization form of the industrial machine into the highly-activated type when the parameter calculated by the first parameter calculating unit is equal to or more than a threshold value and the parameter calculated by the second parameter calculating unit is equal to or more than a threshold value.

The type classifying unit may classify the tendency of the utilization form of the industrial machine into the low-activated type when the parameter calculated by the first parameter calculating unit is equal to or less than a threshold value and the parameter calculated by the second parameter calculating unit is equal to or less than a threshold value.

The maintenance plan formulating unit may formulate a plan for the time to check the industrial machine according to the type classified by the type classifying unit.

The maintenance plan formulating unit may formulate a plan for the cost to check the industrial machine according to the type classified by the type classifying unit.

The maintenance plan formulation device may further include: a first variation determining unit that determines whether the total variation of the value of information measured by the first measuring means after the industrial machine is finally checked is greater than a threshold value; and a second variation determining unit that determines whether the total variation of the value of information measured by the second measuring means after the industrial machine is finally checked is greater than a threshold value. In this case, the maintenance plan formulating unit may advance the time in the plan for the time to check the industrial machine when the first variation determining unit determines that the total variation is greater than the threshold value or the second determining unit determines that the total variation is greater than the threshold value.

The maintenance plan formulation system may further include third measuring means for measuring a value of information which varies by activating the industrial machine. In this case, the maintenance plan formulation device may further include a third variation determining unit that determines whether the total variation of the value of information measured by the third measuring means after the industrial machine is finally checked is greater than a threshold value, and the maintenance plan formulating unit may advance the time in the plan for the time to check the industrial machine when the first variation determining unit determines that the total variation is greater than the threshold value, the second determining unit determines that the total variation is greater than the threshold value, or the third determining unit determines that the total variation is greater than the threshold value.

According to a second aspect of the invention, there is provided a maintenance plan formulation device formulating a plan for maintaining an industrial machine, including: a first parameter calculating unit that calculates a parameter indicating the degree to which the industrial machine has been operated for a specific job on the basis of a value of information measured by first measuring means for measuring the value of information which varies by causing the industrial machine to operate for the specific job; a second parameter calculating unit that calculates a parameter indicating the degree to which the industrial machine has been operated for a job other than the specific job on the basis of a value of information measured by second measuring means for measuring the value of information which varies by causing the industrial machine to operate for a job other than the specific job; a type classifying unit that classifies the tendency of the tendency of the utilization form of the industrial machine into one type of a plurality of predetermined types on the basis of the parameters calculated by the first parameter calculating unit and the second parameter calculating unit; and a maintenance plan formulating unit that formulates a plan for maintaining the industrial machine according to the type classified by the type classifying unit.

According to a third aspect of the invention, there is provided a control method of controlling a maintenance plan formulation device formulating a plan for maintaining an industrial machine, including the steps of: calculating a parameter indicating the degree to which the industrial machine has been operated for a specific job on the basis of a value of information measured by first measuring means for measuring the value of information which varies by causing the industrial machine to operate for the specific job; calculating a parameter indicating the degree to which the industrial machine has been operated for a job other than the specific job on the basis of a value of information measured by second measuring means for measuring the value of information which varies by causing the industrial machine to operate for a job other than the specific job; classifying the tendency of the tendency of the utilization form of the industrial machine into one type of a plurality of predetermined types on the basis of the calculated parameters; and formulating a plan for maintaining the industrial machine according to the classified type.

According to a fourth aspect of the invention, there is provided a computer-readable recording medium storing a computer program which causes a maintenance plan formulation device formulating a plan for maintaining an industrial machine to perform the steps of: calculating a parameter indicating the degree to which the industrial machine has been operated for a specific job on the basis of a value of information measured by first measuring means for measuring the value of information which varies by causing the industrial machine to operate for the specific job; calculating a parameter indicating the degree to which the industrial machine has been operated for a job other than the specific job on the basis of a value of information measured by second measuring means for measuring the value of information which varies by causing the industrial machine to operate for a job other than the specific job; classifying the tendency of the tendency of the utilization form of the industrial machine into one type of a plurality of predetermined types on the basis of the parameters calculated in the step of calculating the first parameter and the step of calculating the second parameter; and formulating a plan for maintaining the industrial machine according to the classified type.

The above-mentioned summary of the invention does not enumerate all essential features of the invention, but groups or sub combinations of these features can constitute the invention.

### Effect of Invention

According to the invention, a plan for maintaining an industrial machine is formulated according to the tendency of the utilization form of the industrial machine. Accordingly, it is possible to formulate a significant maintenance plan without any sign of abnormality in the industrial machine.

### Brief Description of Drawings

FIG. 1 is a diagram illustrating an example of an environment for the usage of a platooning system 100 according to an embodiment of the invention.
FIG. 2 is a block diagram illustrating the configuration of a server 110.
FIG. 3 is a diagram illustrating the flow of processes of the server 110.
FIG. 4 is a diagram illustrating an example of information stored in a variation information storage unit 111 in the form of a table.
FIG. 5 is a diagram illustrating an example of information stored in an industrial machine information storage unit 112 in the form of a table.
FIG. 6 is a diagram illustrating an example of information stored in a basic plan information storage unit 113 in the form of a table.
FIG. 7 is a diagram illustrating an example of information stored in a maintenance plan information storage unit 114 in the form of a table.
FIG. 8 is a diagram illustrating an exemplary hardware configuration of the server 110.

### Description of Embodiments

Hereinafter, the invention will be described with reference to a specific embodiment. A person skilled in the art can make various different embodiments on the basis of the description of the present invention. The present invention is not limited to the embodiment illustrated for explanation.

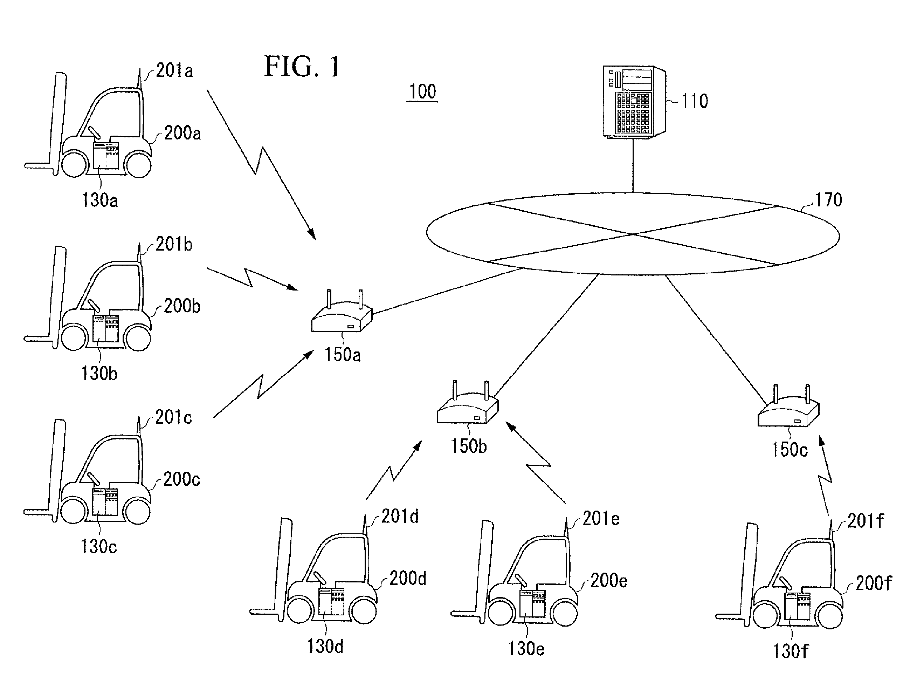

FIG. 1 shows an example of the environment for the usage of a maintenance plan formulation system 100 according to one embodiment. The maintenance plan formulation system 100 formulates a plan for maintaining plural forklifts 200a, 200b, 200c, ... (hereinafter, generically referred to as a forklift 200) which are used all over the world. The forklifts 200 are mainly used in working sites such as factories, warehouses, warehouse retail stores like home improvement centers, and on the premises of cargo stations, ports, and the like. The forklift 200a is provided with an operation time meter measuring a time in which the forklift 200a operates for the cargo handling operation, a traveling distance meter measuring the distance by which the forklift 200a travels, an activation time meter measuring the time in which the forklift 200a is activated, and a communication antenna 201a. The forklift 200 may be an example of the "industrial machine used to conduct a specific operation" in the present invention.

The forklifts 200b, 200c, ... other than the forklift 200a have the same elements as the forklift 200a. In the following description, when an element of a forklift 200 is discriminated from the element of another forklift 200, indices (a, b, c, ...) are attached to the elements for discrimination. For example, the communication antenna 201 a, the communication antenna 201b, and the communication antenna 201c indicate that they are elements of the forklift 200a, the forklift 200b, and the forklift 200c, respectively.

In the following description, the function and operation of an element not having the index attached thereto indicate the function and operation of any element referenced by the same reference numeral. For example, the function and operation described for the communication antenna 200 indicate the functions and operations of the communication antenna 200a, the communication antenna 200b, and the communication antenna 200c.

The maintenance plan formulation system 100 includes a server 110, plural in-vehicle computers 130a, 130b, 130c, ... (hereinafter, generically referred to as an in-vehicle computer 130), plural relay devices 150a, 150b, 150c, ... (hereinafter, generically referred to as a relay device 150), and a communication link 170. The communication link 170 may be elements of computer networks such as the Internet, core networks of communication providers, and various local networks.

The server 110 formulates a plan for maintaining the forklifts 200. Specifically, the server 110 is electrically connected to the relay devices 150 via the communication link 170. When the time in which the respective forklifts 200 conduct the cargo handling operation, the distance by which the respective forklifts 200 travel, and the time in which the respective forklifts 200 are activated are received from the relay devices 150, the server 110 formulates a plan for maintaining the forklifts 200 on the basis of the received information. The server 110 may be an example of the "maintenance plan formulation device" in the invention. The time in which the respective forklifts 200 conduct the cargo handling operation may be an example of the "value of information which varies by causing an industrial machine to operate for a specific job" in the present invention. The distance by which the respective forklifts 200 travel may be an example of the "value of information which varies by causing the industrial machine to operate for a job other than the specific job" in the present invention. The time in which the respective forklifts 200 are activated may be an example of the "value of information which varies by activating the industrial machine" in the present invention.

The in-vehicle computers 130 transmit a variety of information of the forklifts 200 to the relay devices 150. Specifically, the in-vehicle computer 130a is mounted on the forklift 200a. The in-vehicle computer 130a is electrically connected to the operation time meter, the traveling distance meter, and the activation time meter via data cables. The in-vehicle computer 130a is electrically connected to the communication antenna 201a via a communication cable. When receiving input of data output from the operation time meter, the traveling distance meter, and the activation time meter, the in-vehicle computer 130a wirelessly transmits the data to the relay device 150a via the communication antenna 201a. Similarly, the in-vehicle computer 130b transmits a variety of information of the forklift 200b to the relay device 150a. The in-vehicle computer 130c transmits a variety of information of the forklift 200c to the relay device 150a. The in-vehicle computer 130d transmits a variety of information of the forklift 200d to the relay device 150b. The in-vehicle computer 130e transmits a variety of information of the forklift 200e to the relay device 150b. The in-vehicle computer 130f transmits a variety of information of the forklift 200f to the relay device 150c. The operation time meter may be an example of the "first measuring means" in the present invention. The traveling distance meter may be an example of the "second measuring means" in the present invention. The activation time meter may be an example of the "third measuring means" in the present invention.

The relay devices 150 transmit data transmitted from the in-vehicle computers 130 to the server 110. Specifically, the relay devices 150 are installed in the working sites in which the forklifts 200 are used. When receiving data transmitted from the in-vehicle computers 130 used in the working sites, the relay devices 150 store the data. The relay devices 150 transmit the stored data to the server 110 at a predetermined time interval.

In the maintenance plan formulation system 100, when the engine of the forklift 200a is started up, the activation time meter installed in the forklift 200a starts measuring the activation time of the forklift 200a. When the engine of the forklift 200a is stopped, the activation time meter installed in the forklift 200a outputs data indicating the time in which the forklift 200a is activated to an in-vehicle computer 130a. The activation time meter installed in the forklift 200a repeats this process whenever the forklift 200a is activated.

When the forklift 200a starts traveling, the traveling distance meter installed in the forklift 200a starts measuring the traveling distance of the forklift 200a. When the forklift 200a stops traveling, the traveling distance meter installed in the forklift 200a outputs data indicating the distance by which the forklift 200a travels to the in-vehicle computer 130a. The traveling distance meter installed in the forklift 200a repeats this process whenever the forklift 200a travels.

When the forklift 200a starts the cargo handling operation, the operation time meter installed in the forklift 200a starts measuring the cargo handling operation time of the forklift 200a. When the forklift 200a stops the cargo handling operation, the operation time meter installed in the forklift 200a outputs data indicating the time in which the forklift 200a conducts the cargo handling operation to the in-vehicle computer 130a. The operation time meter installed in the forklift 200a repeats this process whenever the forklift 200a repeatedly conducts the cargo handling operation.

When receiving input of data output from the activation time meter, the traveling distance meter, and the operation time meter, the in-vehicle computer 130a transmits the data to the relation device 150a. When receiving the data transmitted from the in-vehicle computer 130a, the relay device 150a stores the data. The relay device 150a transmits the stored data to the server 110 at a predetermined time interval.

When receiving the data transmitted from the relay device 150a, the server 110 calculates the cargo handling operation time and the traveling distance per unit time of the forklift 200a on the basis of the received data and the period of time passing after the forklift 200a is finally checked. The server 110 classifies the tendency of the utilization form of the forklift 200a into any one of a heavily-operating type in which the frequency of cargo handling operation is higher than the frequency of traveling, a lightly-operating type in which the frequency of traveling is higher than the frequency of cargo handling operation, a highly-activated type in which the frequency of cargo handling operation and the frequency of traveling are both high, and a low-activated type in which the frequency of cargo handling operation and the frequency of traveling are both low on the basis of the calculated values of the cargo handling operation time and the traveling distance per unit time. The server 110 formulates a maintenance plan for the time or cost to check the forklift 200a according to the classified type.

When receiving data transmitted from the relay device 150a, the server 110 determines whether the total cargo handling operation time, the total traveling distance, or the total activation time of the forklift 200a measured after the forklift 200a is finally checked is greater than a threshold value on the basis of the received data. The server 110 advances the time in the plan for the time to check the forklift 200a.

In this embodiment, to prevent complication of the description, it is assumed that the maintenance plan formulation system 100 includes a single server 110, but the maintenance plan formulation system 100 may have plural servers 110.

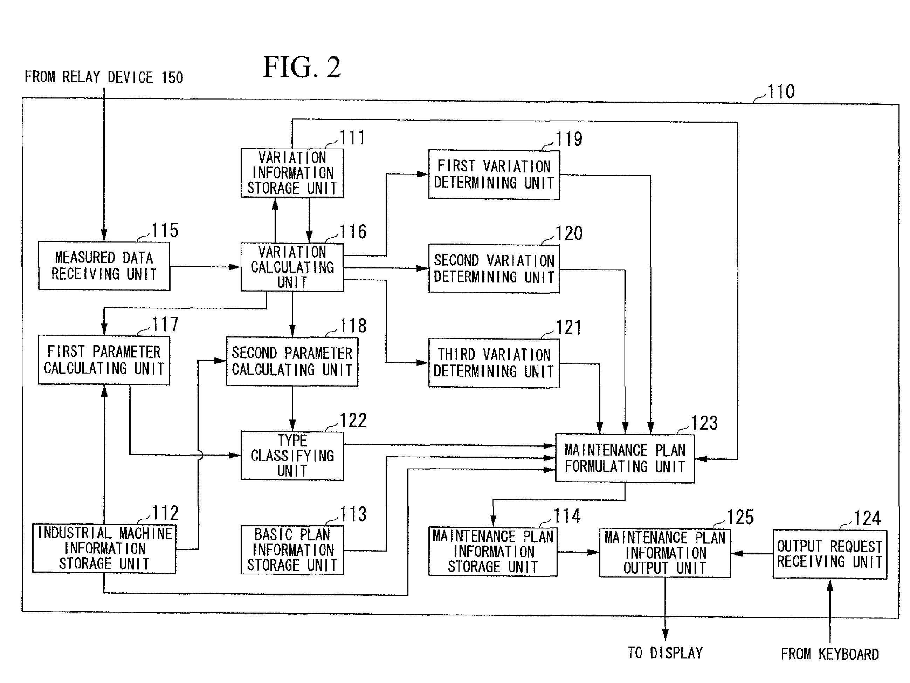

FIG. 2 shows an example of the block configuration of the server 110. The server 110 includes a variation information storage unit 111, an industrial machine information storage unit 112, a basic plan information storage unit 113, a maintenance plan information storage unit 114, a measured data receiving unit 115, a variation calculating unit 116, a first parameter calculating unit 117, a second parameter calculating unit 118, a first variation determining unit 119, a second variation determining unit 120, a third variation determining unit 121, a type classifying unit 122, a maintenance plan formulating unit 123, an output request receiving unit 124, and a maintenance plan data output unit 125. The functions and operations of the elements will be described below.

The measured data receiving unit 115 receives data indicating the values measured by the operation time meter, the traveling distance meter, and the activation time meter installed in the forklifts 200. Specifically, when receiving the data indicating the values measured by the operation time meter, the traveling distance meter, and the activation time meter installed in the forklifts 200 from the relay devices 150, the measured data receiving unit 115 sends the received data to the variation calculating unit 116.

The variation calculating unit 116 calculates the total operation time in which the cargo handling operation is conducted, the total traveling distance by which the forklift travels, and the total activation time in which the forklift is activated after the corresponding forklift 200 is finally checked. Specifically, when receiving the data indicating the values measured by the operation time meter, the traveling distance meter, and the activation time meter installed in the forklift 200 from the measured data receiving unit 115, the variation calculating unit 116 calculates the total operation time in which the cargo handling operation is conducted, the total traveling distance by which the forklift travels, and the total activation time in which the forklift is activated after the corresponding forklift 200 is finally checked on the basis of the received data and the information stored in the variation information storage unit 111. The variation calculating unit 116 stores the information indicating the calculated total operation time, total traveling distance, and total activation time in the variation information storage unit 111. The variation calculating unit 116 sends the data indicating the calculated total operation time to the first parameter calculating unit 117 and the first variation determining unit 119. The variation calculating unit 116 sends the data indicating the calculated total traveling distance to the second parameter calculating unit 118 and the second variation determining unit 120. The variation calculating unit 116 sends the data indicating the calculated total activation time to the third variation determining unit 121.

The first parameter calculating unit 117 calculates a parameter indicating the degree to which the forklift 200 has been operated for the cargo handling operation. Specifically, when receiving the data indicating the total operation time in which the forklift 200 conducts the cargo handling operation after the forklift is finally checked from the variation calculating unit 116, the first parameter calculating unit 117 calculates the parameter indicating the degree to which the forklift 200 has been operated for the cargo handling operation on the basis of the received data and the information stored in the industrial machine information storage unit 112. The first parameter calculating unit 117 sends the data indicating the calculated parameter to the type classifying unit 122. The parameter indicating the degree to which the forklift 200 has been operated for the cargo handling operation may be an example of the "parameter indicating the degree to which the industrial machine has been operated for a specific job" in the present invention.

The second parameter calculating unit 118 calculates the parameter indicating the degree to which the forklift 200 has travelled. Specifically, when receiving the data indicating the total distance by which the forklift 200 travels after it is finally checked from the variation calculating unit 116, the second parameter calculating unit 118 calculates the parameter indicating the degree to which the forklift 200 has travelled on the basis of the received data and the information stored in the industrial machine information storage unit 112. The second parameter calculating unit 118 sends the data indicating the calculated parameter to the type classifying unit 122. The parameter indicating the degree to which the forklift 200 has travelled may be an example of the "parameter indicating the degree to which the industrial machine has been operated for a job other than the specific job" in the present invention.

The first variation determining unit 119 determines whether the total operation time in which the cargo handling operation is conducted by the forklift 200 and which is measured by the operation time meter after the forklift 200 is finally checked is greater than a threshold value. Specifically, when receiving the data indicating the total operation time in which the cargo handling operation is conducted by the forklift 200 after it is finally checked from the variation calculating unit 116, the first variation determining unit 119 determines whether the total operation time is greater than a threshold value. When determining that "the total operation time in which the cargo handling operation is conducted by the forklift 200 after it is finally checked is greater than the threshold value", the first variation determining unit 119 sends data indicating the determination result to the maintenance plan formulating unit 123.

The second variation determining unit 120 determines whether the total traveling distance of the forklift 200 measured by the traveling distance meter after the forklift 200 is finally checked is greater than a threshold value. Specifically, when receiving the data indicating the total traveling distance by which the forklift 200 travels after it is finally checked from the variation calculating unit 116, the second variation determining unit 120 determines whether the total traveling distance is greater than a threshold value. When determining that "the total traveling distance by which the forklift 200 travels after it is finally checked is greater than the threshold value", the second variation determining unit 120 sends the data indicating the determination result to the maintenance plan formulating unit 123.

The third variation determining unit 121 determines whether the total activation time of the forklift 200 measured by the activation time meter after the forklift 200 is finally checked is greater than a threshold value. Specifically, when receiving the data indicating the total activation time in which the forklift 200 is activated after it is finally checked from the variation calculating unit 116, the third variation determining unit 121 determines whether the total activation time is greater than a threshold value. When determining that "the total activation time in which the forklift 200 is activated after it is finally checked is greater than the threshold value", the third variation determining unit 121 sends the data indicating the determination result to the maintenance plan formulating unit 123.

The type classifying unit 122 classifies the tendency of the utilization form of the forklift 200 into any one of plural predetermined types. Specifically, when receiving the parameter indicating the degree to which the forklift 200 has been operated for the cargo handling operation from the first parameter calculating unit 117 and receiving the parameter indicating the degree to which the forklift 200 has travelled from the second parameter calculating unit 118, the type classifying unit 122 classifies the tendency of the utilization form of the forklift 200 into one of predetermined plural types on the basis of the received data. The type classifying unit 122 sends data indicating the classified type to the maintenance plan formulating unit 123.

The maintenance plan formulating unit 123 formulates a plan for maintaining the forklift 200. Specifically, when receiving the data indicating the classified type into which the tendency of the utilization form of the forklift 200 is classified from the type classifying unit 122, the maintenance plan formulating unit 123 formulates a plan for maintaining the forklift 200 on the basis of the received data and the information stored in the variation information storage unit 111, the industrial machine information storage unit 112, and the basic plan information storage unit 113. The maintenance plan formulating unit 123 stores information indicating the formulated plan to the maintenance plan information storage unit 124.

When the first variation determining unit 119 determines that "the total operation time in which the forklift 200 conducts the cargo handling operation after it is finally checked is greater than the threshold value", the maintenance plan formulating unit 123 advances the time in the plan for the time to check the forklift 200. Specifically, when receiving the data indicating the determination result that "the total operation time in which the forklift 200 conducts the cargo handling operation after it is finally checked is greater than the threshold value" from the first variation determining unit 119, the maintenance plan formulating unit 123 advances the time in the plan for the time to check the forklift 200. Then, the maintenance plan formulating unit 123 updates information indicating the plan for the advanced time out of the information stored in the maintenance plan information storage unit 124.

When the second variation determining unit 120 determines that "the total distance by which the forklift 200 travels after it is finally checked is greater than the threshold value", the maintenance plan formulating unit 123 advances the time in the plan for the time to check the forklift 200. Specifically, when receiving the data indicating the determination result that "the total distance by which the forklift 200 travels after it is finally checked is greater than the threshold value" from the second variation determining unit 120, the maintenance plan formulating unit 123 advances the time in the plan for the time to check the forklift 200. The maintenance plan formulating unit 123 updates information indicating the plan for the advanced time out of the information stored in the maintenance plan information storage unit 124.

When the third variation determining unit 121 that "the total activation time in which the forklift 200 is activated after it is finally checked is greater than the threshold value", the maintenance plan formulating unit 123 advances the time in the plan for the time to check the forklift 200. Specifically, when receiving data indicating the determination result that "the total activation time in which the forklift 200 is activated after it is finally checked is greater than the threshold value" from the third variation determining unit 121, the maintenance plan formulating unit 123 advances the time in the plan for the time to check the forklift 200. Then, the maintenance plan formulating unit 123 updates information indicating the plan for the advanced time out of the information stored in the maintenance plan information storage unit 124.

The output request receiving unit 124 receives the input of an output request for outputting the plan for maintaining the forklift 200. Specifically, when receiving the output request, which is input from input means such as a keyboard, for outputting the plan for maintaining the forklift 200, the output request receiving unit 124 sends the data indicating the received output request to the maintenance plan information output unit 125.

The maintenance plan information output unit 125 outputs output data such as display data indicating the plan for maintaining the forklift 200 to output means such as a display. Specifically, when receiving the data indicating that the output request for outputting the plan for maintaining the forklift 200 is received from the output request receiving unit 124, the maintenance plan information output unit 125 generates, for example, display data indicating the plan for maintaining the forklift 200 on the basis of the information stored in the maintenance plan information storage unit 114. The maintenance plan information storage unit 114 outputs the generated display data to the output means such as a display.

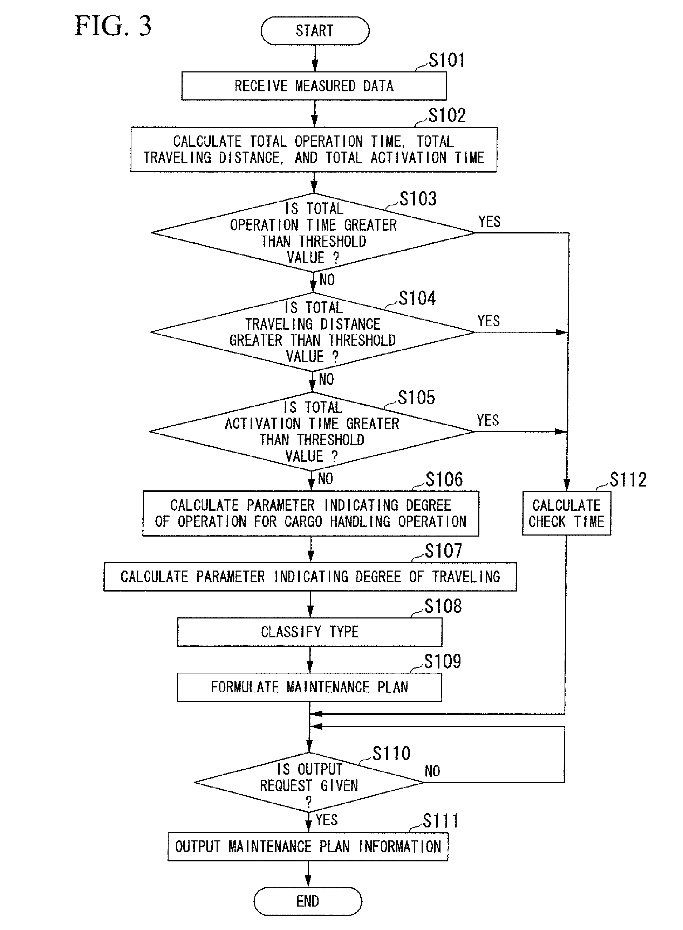

FIG. 3 shows an example of the flow of processes of the server 110. The operation time meter installed in the forklift 200 measures the operation time when the forklift 200 conducts the cargo handling operation, and transmits data indicating the measured time to the relay device 150. The traveling distance meter installed in the forklift 200 measures the traveling distance when the forklift 200 travels, and transmits data indicating the measured distance to the relay device 150. The activation time meter installed in the forklift 200 measures the activation time when the forklift 200 is activated, and transmits data indicating the measured time to the relay device 150. When receiving the data transmitted from the operation time meter, the traveling distance meter, and the activation time meter, the relay device 150 stores the received data. Then, the relay device 150 transmits the stored data to the server 110, for example, every other day.

When the measured data receiving unit 115 receives the data transmitted from the relay device 150 (S101), the variation calculating unit 116 calculates the total operation time in which the forklift 200 conducts the cargo handling operation, the total traveling distance by which the forklift travels, and the total activation time in which the forklift is activated, after the forklift 200 is finally checked on the basis of the data received by the measured data receiving unit 115 (S102).

The first variation determining unit 119 determines whether the total operation time calculated by the variation calculating unit 116 is greater than a time set as the threshold value (S103). When the first variation determining unit 119 determines that "the total operation time in which the forklift 200 conducts the cargo handling operation after it is finally checked is not greater than the threshold value" (No in S103), the second variation determining unit 120 determines whether the total traveling distance calculated by the variation calculating unit 116 is greater than a distance set as the threshold value (S104).

When the second variation determining unit 120 determines that "the total traveling distance of the forklift 200 measured by the traveling distance meter after the forklift 200 is finally checked is not greater than the threshold value" (No in S104), the third variation determining unit 121 determines whether the total activation time calculated by the variation calculating unit 116 is greater than a time set as the threshold value (S105).

When the third variation determining unit 120 determines that "the total activation time of the forklift 200 measured by the activation time meter after the forklift 200 is finally checked is not greater than the threshold value" (No in S105), the first parameter calculating unit 117 calculates the parameter indicating the degree to which the forklift 200 has been operated for the cargo handling operation on the basis of the total operation time calculated by the variation calculating unit 116 (S 106). For example, the first parameter calculating unit 117 calculates the cargo handling operation time of the forklift 200 per unit time as the parameter indicating the degree to which the forklift 200 has been operated for the cargo handling operation.

The second parameter calculating unit 118 calculates the parameter indicating the degree to which the forklift 200 has travelled on the basis of the total traveling distance calculated by the variation calculating unit 116 (S107). For example, the second parameter calculating unit 118 calculates the traveling distance of the forklift 200 per unit time as the parameter indicating the degree to which the forklift 200 has travelled.

The type classifying unit 122 classifies the tendency of the utilization form of the forklift 200 into any of predetermined plural types (S108). For example, the type classifying unit 122 compares the cargo handling operation time of the forklift 200 per unit time calculated by the first parameter calculating unit 117 with the time set as the threshold value. The type classifying unit 122 compares the traveling distance of the forklift 200 per unit time calculated by the second parameter calculating unit 117 with the distance set as the threshold value. When the cargo handling operation time per unit time is equal to or more than the threshold value and the traveling distance per unit time is equal or less than the threshold value, the type classifying unit 122 classifies the tendency of the utilization form of the forklift 200 into a heavily-operating type in which the frequency of operation for the cargo handling operation is high. When the cargo handling operation time per unit time is equal to or less than the threshold value and the traveling distance per unit time is equal to or more than the threshold value, the type classifying unit 122 classifies the tendency of the utilization form of the forklift 200 into a lightly-operating type in which the frequency of traveling is high. When the cargo handling operation time per unit time is equal to or more than the threshold value and the traveling distance per unit time is equal to or less than the threshold value, the type classifying unit 122 classifies the tendency of the utilization form of the forklift 200 into a highly-activated type in which both the frequency of operation for the cargo handling operation and the frequency of traveling are high. When the cargo handling operation time per unit time is equal to or less than the threshold value and the traveling distance per unit time is equal to or less than the threshold value, the type classifying unit 122 classifies the tendency of the utilization form of the forklift 200 into a low-activated type in which both the frequency of operation for the cargo handling operation and the frequency of traveling are low.

The maintenance plan formulating unit 123 formulates a plan for maintaining the forklift 200 according to the type classified by the type classifying unit 122 (S109). For example, the maintenance plan formulating unit 123 formulates a plan for the time to check the forklift 200 or the cost to check the forklift.

When the output request receiving unit 124 receives the input of the output request for outputting the plan for maintaining the forklift 200 (S110), the maintenance plan information output unit 125 outputs output data such as display data indicating the plan formulated by the maintenance plan formulating unit 123 to the output means such as a display (S111). In this way, the plan for maintaining the forklift 200 is displayed, for example, on the display.

When receiving the data transmitted from the relay device 150, the server 110 repeatedly performs the processes described in steps S101 to S111. At this time, the maintenance plan formulating unit 123 stores the information indicating the formulated plan in the maintenance plan information storage unit 114.

Therefore, when the first variation determining unit 119 determines that "the total operation time in which the forklift 200 conducts the cargo handling operation after it is finally checked is greater than the threshold value" (Yes in S103), the maintenance plan formulating unit 123 advances the time in the plan for the time to check the forklift 200 (S112). The maintenance plan formulating unit 123 updates the information indicating the plan for the advanced time out of the information stored in the maintenance plan information storage unit 124.

Similarly, when the second variation determining unit 120 determines that "the total traveling distance of the forklift 200 measured by the traveling distance meter after the forklift 200 is finally checked is greater than the threshold value" (Yes in S104), the maintenance plan formulating unit 123 advances the time in the plan for the time to check the forklift 200 (S112). The maintenance plan formulating unit 123 updates the information indicating the plan for the advanced time out of the information stored in the maintenance plan information storage unit 124.

Similarly, when the third variation determining unit 120 determines that "the total activation time of the forklift 200 measured by the activation time meter after the forklift 200 is finally checked is greater than the threshold value" (Yes in S105), the maintenance plan formulating unit 123 advances the time in the plan for the time to check the forklift 200 (S112). The maintenance plan formulating unit 123 updates the information indicating the plan for the advanced time out of the information stored in the maintenance plan information storage unit 124.

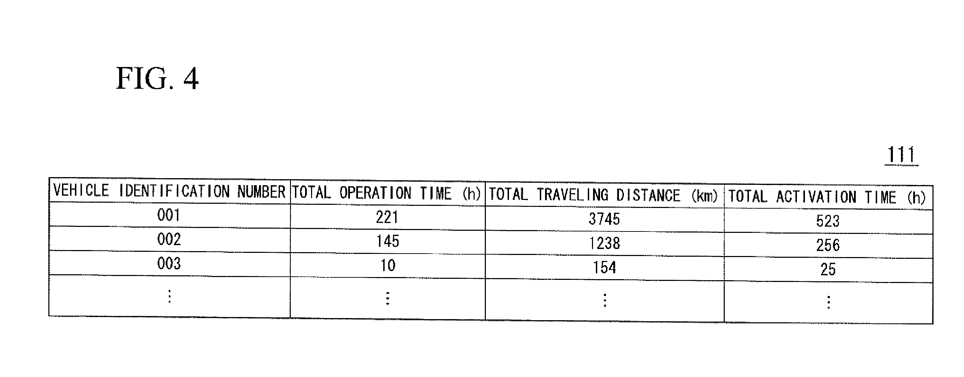

FIG. 4 shows an example of information stored in the variation information storage unit 111 in the form of a table. The variation information storage unit 111 stores the vehicle identification numbers, the total operation time, the total traveling distance, and the total activation time in correlation with each other.

The vehicle identification number may be identification signs for uniquely identifying the forklifts 200 among the forklifts 200 for which the maintenance plan is formulated by the maintenance plan formulation system 100. The total operation time may be the total time in which the forklift 200 identified by the vehicle identification number conducts the cargo handling operation after it is finally checked. The total traveling distance may be the total distance by which the forklift 200 identified by the vehicle identification number travels after it is finally checked. The total activation time may be the total time in which the forklift 200 identified by the vehicle identification number is activated after it is finally checked.

The variation calculating unit 116 calculates the total operation time for the cargo handling operation, the total traveling distance, and the total activation time after the forklift 200 is finally checked on the basis of the information stored in the variation information storage unit 111 and the data received from the measured data receiving unit 115. For example, it is assumed that the variation calculating unit 116 receives data indicating that the operation time in which the forklift 200 with a vehicle identification number "001" conducts the cargo handling operation for a day is "1 hour", the traveling distance is "13 km", and the activation time is "2 hours" from the measured data receiving unit 115. In this case, the variation calculating unit 116 reads the information indicating that the total operation time correlated with the vehicle identification number "001" is "221 hours", the total traveling distance is "3745 km", and the total activation time is "523 hours" out of the information stored in the variation information storage unit 111. The variation calculating unit 116 adds the values of information indicated by the data received from the measured data receiving unit 115 to the read values of information and calculates the newest total operation time, the newest total traveling distance, and the newest total activation time of the forklift 200a identified by the vehicle identification number "001". In this example, the variation calculating unit 116 adds the operation time "1 hour" for a day indicated by the data received from the measured data receiving unit 115 to the total operation time "221 hours" stored in the variation information storage unit 111 and calculates the newest total operation time as "222 hours". The variation calculating unit 116 adds the traveling distance "13 km" for a day indicated by the data received from the measured data receiving unit 115 to the total traveling distance "3745 km" stored in the variation information storage unit 111 and calculates the newest total traveling distance as "3758 km". The variation calculating unit 116 adds the activation time "2 hours" for a day indicated by the data received from the measured data receiving unit 115 to the total activation time "523 hours" stored in the variation information storage unit 111 and calculates the newest total activation time as "525 hours". The variation calculating unit 116 updates the information stored in the variation information storage unit 111 with the calculated values.

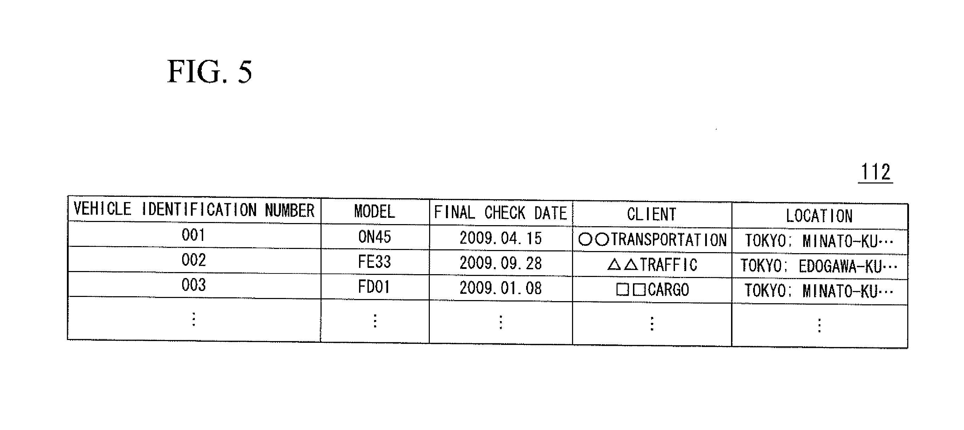

FIG. 5 shows an example of the information stored in the industrial machine information storage unit 112 in the form of a table. The industrial machine information storage unit 112 stores the vehicle identification number, the model, the final check date, the client, and the location in correlation with each other. The vehicle identification number is information having the same meaning as the vehicle identification number stored in the variation information storage unit 111 and thus detailed description thereof will not be repeated.

The model may be information indicating the model of the forklift 200 identified by the vehicle identification number. The final check date may be a date in which the forklift 200 identified by the vehicle identification number is finally checked. The client may be information indicating the client using the forklift 200 identified by the vehicle identification number. The location may be information indicating the location of the client using the forklift 200 identified by the vehicle identification number.

The first parameter calculating unit 117 calculates the parameter indicating the degree to which the forklift 200 has been operated for the cargo handling operation on the basis of the information stored in the industrial machine information storage unit 112 and the data received from the variation calculating unit 116. For example, it is assumed that the first parameter calculating unit 117 receives the data indicating that the total operation time in which the forklift 200a with the vehicle identification number "001" conducts the cargo handling operation after it is finally checked is "222 hours" from the variation calculating unit 116. In this case, the first parameter calculating unit 117 reads the information indicating the final check date of "April 15, 2009" correlated with the vehicle identification number "001" out of the information stored in the industrial machine information storage unit 112. The first parameter calculating unit 117 calculates the number of days passing from the final check date "April 15, 2009" using a system clock of the server 110. For example, when the date acquired from the system clock of the server 110 is "January 18, 2010", the first parameter calculating unit 117 calculates the number of days passing from the final check date "April 15, 2009" as "279 days". The first parameter calculating unit 117 calculates the operation time in which the forklift 200a will conduct the cargo handling operation, for example, for 1 year on the basis of the total operation time "222 hours" in which the forklift 200a conducts the cargo handling operation after it is finally checked and the number of days "279 days" passing from the final check date "April 15, 2009" of the forklift 200a. In this example, the first parameter calculating unit 117 calculates the operation time in which the forklift 200a will conduct the cargo handling operation for 1 year as 222÷279×365≈290 hours.

The second parameter calculating unit 118 calculates the parameter indicating the degree to which the forklift 200 has travelled on the basis of the information stored in the industrial machine information storage unit 112 and the data received from the variation calculating unit 116. For example, it is assumed that the second parameter calculating unit 117 receives the data indicating the total traveling time "3758 km" by which the forklift 200a with the vehicle identification number "001" travels after it is finally checked from the variation calculating unit 116. In this case, the second parameter calculating unit 118 reads the information indicating the final check date "April 15, 2009" correlated with the vehicle identification information "001" out of the information stored in the industrial machine information storage unit 112. The second parameter calculating unit 118 calculates the number of days passing from the final check date "April 15, 2009" using the system clock of the server 110. For example, when the date acquired from the system clock of the server 110 is "January 18, 2010", the second parameter calculating unit 118 calculates the number of days passing from the final check date "April 15, 2009" as "279 days". The second parameter calculating unit 118 calculates the traveling distance by which the forklift 200a will travel, for example, for 1 year on the basis of the total traveling distance "3758 km" by which the forklift 200a travels after it is finally checked and the number of days "279 days" passing from the final check date "April 15, 2009". In this example, the second parameter calculating unit 118 calculates the traveling distance by which the forklift 200a will travel for a year as 3758÷279×365≈4916 km.

The type classifying unit 122 classifies the tendency of the utilization form of the forklift 200 into one type of the heavily-operating type, the lightly-operating type, the highly-activated type, and the low-activated type on the basis of the values calculated by the first parameter calculating unit 117 and the second parameter calculating unit 118. For example, the type classifying unit 122 compares the cargo handling operation time of the forklift 200 per unit time calculated by the first parameter calculating unit 117 with the time "300 hours" set as the threshold value. The type classifying unit 122 compares the traveling distance of the forklift 200 per unit time calculated by the second parameter calculating unit 117 with the distance "5000 km" set as the threshold value. In the above-mentioned example, the first parameter calculating unit 117 calculates the operation time in which the forklift 200a will conduct the cargo handling operation for a year as "290 hours". The second parameter calculating unit 118 calculates the traveling distance by which the forklift 200a will travel for a year as 4916 km. In this example, the parameters calculated by the first parameter calculating unit 117 and the second parameter calculating unit 118 are equal to or less than the threshold values. Therefore, the type calculating unit 122 classifies the tendency of the utilization form of the forklift 200a into the low-activated type.

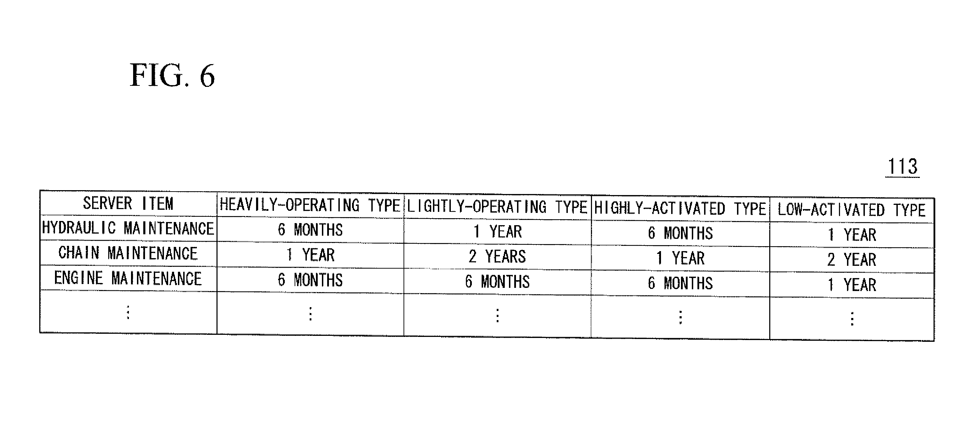

FIG. 6 shows an example of the information stored in the basic plan information storage unit 113 in the form of a table. The basic plan information storage unit 113 stores the service item, the heavily-operating type, the lightly-operating type, the highly-activated type, and the low-activated type in correlation with each other.

The service item may be information indicating the check details of the forklift 200a. The heavily-operating type may be information indicating the times of the check details to be re-checked after the forklift 200a classified into the heavily-operating type is finally checked. The lightly-operating type may be information indicating the times of the check details to be re-checked after the forklift 200a classified into the lightly-operating type is finally checked. The highly-activated type may be information indicating the times of the check details to be re-checked after the forklift 200a classified into the highly-activated type is finally checked. The low-activated type may be information indicating the times of the check details to be re-checked after the forklift 200a classified into the low-activated type is finally checked.

The maintenance plan formulating unit 123 formulates the plan for maintaining the forklift 200 on the basis of the information stored in the variation information storage unit 111, the industrial machine information storage unit 112, and the basic plan information storage unit 113 and the data received from the type classifying unit 122. For example, it is assumed that the maintenance plan formulating unit 123 receives the data indicating that the tendency of the utilization form of the forklift 200 with the vehicle identification number "001" is the low-activated type from the type classifying unit 122. In this case, the maintenance plan formulating unit 123 reads a variety of information correlated with the vehicle identification number "001" out of the information stored in the variation information storage unit 111 and the industrial machine information storage unit 111. The maintenance plan formulating unit 123 updates the information stored in the maintenance plan information storage unit 114 with the read information. The maintenance plan forming unit 123 calculates expected check dates of the check details on the basis of the information stored in the basic plan information storage unit 113 and stores the information stored in the maintenance plan information storage unit 114 with the calculated dates. In this example, the maintenance plan formulating unit 123 reads the information indicating the times of the check details to be re-checked for the forklift 200a classified into the low-activated type out of the information stored in the basic plan information storage unit 113. The maintenance plan formulating unit 123 reads the information indicating the final check date "April 15, 2009" of the forklift 200a with the vehicle identification number "001" out of the information stored in the industrial machine information storage unit 111. The maintenance plan formulating unit 123 adds the times of the check details read from the basic plan information storage unit 113 to the final check date "April 15, 2009" and calculates the dates to re-check the forklift 200a. For example, the check time of the service item "hydraulic maintenance" in the low-activated type is "1 year". Accordingly, the maintenance plan formulating unit 123 adds the check time of "1 year" to the final check date "April 15, 2009" and calculates the date to re-check the service item "hydraulic maintenance" as "April 15, 2010".

In this example, the basic plan information storage unit 113 stores the times of the check details to re-check the forklift after it is finally checked. In addition, the basic plan information storage unit 113 may further store information indicating the costs for checking the check details. In this case, the maintenance plan formulating unit 123 can formulate the plan for the cost to check the forklift 200 on the basis of the information stored in the basic plan information storage unit 113.

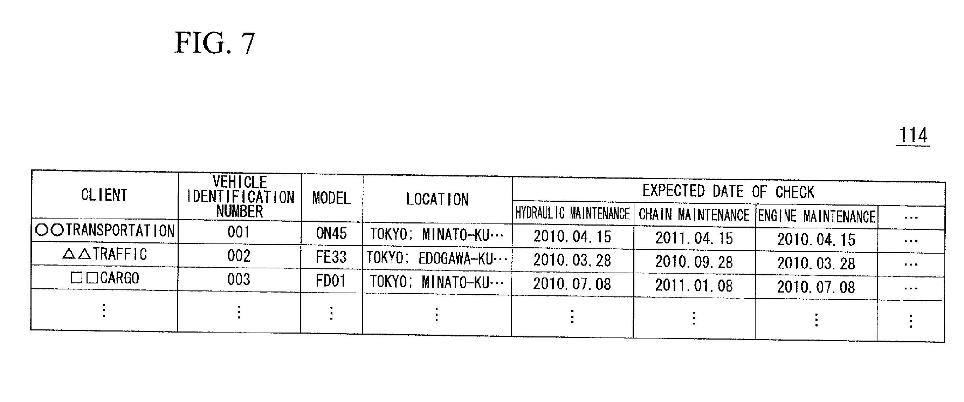

FIG. 7 shows an example of the information stored in the maintenance plan information storage unit 114 in the form of a table. The maintenance plan information storage unit 114 stores the client, the vehicle identification number, the model, the location, and the expected check date in correlation with each other. The vehicle identification number is information having the same meaning as the vehicle identification number stored in the variation information storage unit 111 and thus description thereof will not be repeated. The information of the client, the model, and the location is information having the same meaning as the information stored in the industrial machine information storage unit 112 and thus description thereof will not be repeated.

In this example, the maintenance plan formulating unit 123 stores the client, the vehicle identification number, the model, the location, and the expected check date in correlation with each other, but desired information out of the information stored in the variation information storage unit 111, the industrial machine information storage unit 112, and the basic plan information storage unit 113 may be stored in the maintenance plan information storage unit 114.

As described above, the maintenance plan formulation system 100 formulates the plan for maintaining the forklifts 200 according to the tendency of the utilization form of the forklifts 200. Accordingly, in the maintenance plan formulation system 100, it is possible to formulate a significant maintenance plan without any sign of abnormality in the forklifts 200.

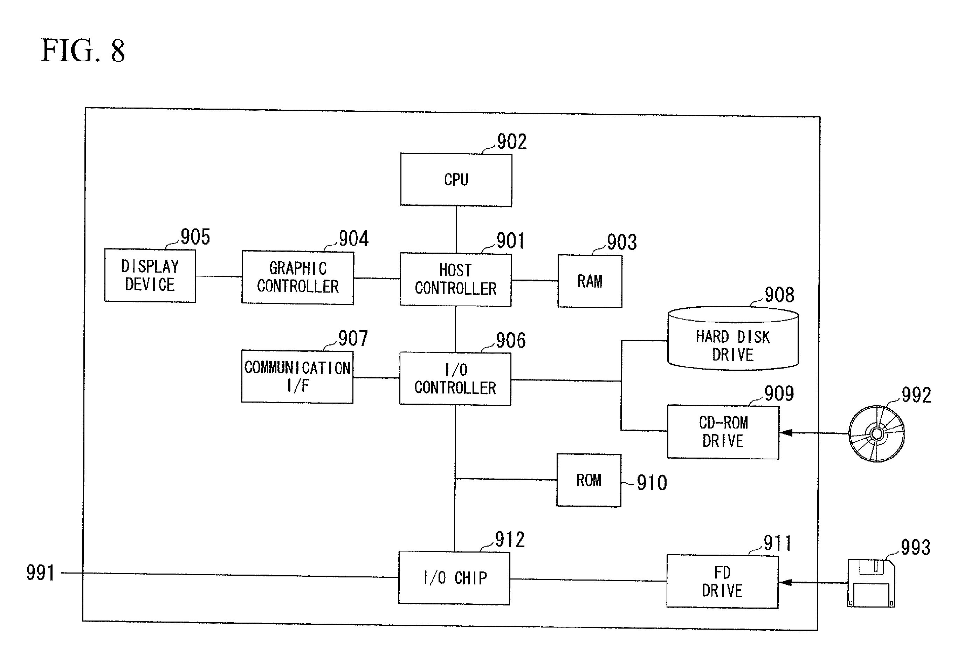

FIG. 8 is a diagram illustrating an exemplary hardware configuration in a case where the server 110 is constructed with an electronic information processor such as a computer. The server 110 includes a CPU (Central Processing Unit) periphery unit, an input and output unit, and a legacy input and output unit. The CPU periphery unit includes a CPU 902, a RAM (Random Access Memory) 903, a graphic controller 904, and a display device 905 which are connected to each other via a host controller 901. The input and output unit includes a communication interface 907, a hard disk drive 908, and a CD-ROM (Compact Disk Read Only Memory) drive 909, which are connected to the host controller 901 via the input and output controller 906. The legacy input and output unit includes a ROM (Read Only Memory) 910, a flexible disk drive 911, and an input and output chip 912, which are connected to an input and output controller 906.

The host controller 901 connects the RAM 903, the CPU 902 accessing the RAM 903 at a high transmission rate, and the graphic controller 904. The CPU 902 operates on the basis of a program stored in the ROM 910 and the RAM 903 and controls the constituent units. The graphic controller 904 acquires image data generated on a frame buffer disposed in the RAM 903 by the CPU 902 or the like and displays the acquired image data on the display device 905. Alternatively, the graphic controller 904 may include a frame buffer storing the image data generated by the CPU 902 or the like therein.

The input and output controller 906 connects the host controller 901, the hard disk drive 908 which is a relatively-high-rate input and output device, the communication interface 907, and the CD-ROM drive 909. The hard disk drive 908 stores the programs and data used by the CPU 902. The communication interface 907 accesses a network communication device 991 and transmits and receives the program or data thereto and therefrom. The CD-ROM drive 909 reads the program or data from a CD-ROM 992 and supplies the read program or data to the hard disk drive 908 and the communication interface 907 via the RAM 903.

The ROM 910 and relatively-low-rate input and output devices of the flexible disk drive 911 and the input and output chip 912 are connected to the input and output controller 906. The ROM 910 stores a booting program which is executed at the time of starting up the server 110 or programs depending on the hardware of the server 110. The flexible disk drive 911 reads a program or data from a flexible disk 993 and supplies the read program or data to the hard disk drive 908 and the communication interface 907 via the RAM 903. The input and output chip 912 is connected to various input and output devices via the flexible disk drive 911 or a parallel port, a serial port, a keyboard port, a mouse port, or the like.

The programs executed by the CPU 902 are stored in a recording medium such as a flexible disk 993, a CD-ROM 992, or an IC (Integrated Circuit) card and are provided to a user. The programs stored in the recording medium may be compressed or non-compressed. The programs are installed in the hard disk drive 908 from the recording medium, are read to the RAM 903, and are executed by the CPU 902. The programs executed by the CPU 902 causes the server 110 to serve as the industrial machine information storage unit 112, the variation information storage unit 111, the basic plan information storage unit 113, the maintenance plan information storage unit 114, the measured data receiving unit 115, the variation calculating unit 116, the first parameter calculating unit 117, the second parameter calculating unit 118, the first variation determining unit 119, the second variation determining unit 120, the third variation determining unit 121, the type classifying unit 122, the maintenance plan formulating unit 123, the output request receiving unit 124, and the maintenance plan data output unit 125, which are described with reference to FIGS. 1 to 7.

The programs described hitherto may be stored in an external storage medium. An optical recording medium such as a DVD (Digital Versatile Disk) or a PD (Phase Disk), a magneto-optical recording medium such as an MD (Mini Disk), a tape medium, a semiconductor memory such as an 1C card, and the like in addition to the flexible disk 993 and the CD-ROM 992 can be used as the storage medium. A storage medium such as a hard disk or a RAM installed in a server system connected to a dedicated communication network or the Internet may be used as a recording medium to provide the maintenance plan formulation system 100 as a program using a network.

While the embodiments of the invention are described above with reference to the accompanying drawings, the specific configuration of the invention is not limited to the above-mentioned embodiments, but includes changes in design and the like without departing from the concept of the invention.

### Industrial Applicability

The invention can be used to formulate a plan for maintaining an industrial machine used to conduct a specific operation.

### Reference Signs List

- 100:: MAINTENANCE PLAN FORMULATION SYSTEM
- 110:: SERVER
- 111:: VARIATION INFORMATION STORAGE UNIT
- 112:: INDUSTRIAL MACHINE INFORMATION STORAGE UNIT
- 113:: BASIC PLAN INFORMATION STORAGE UNIT
- 114:: MAINTENANCE PLAN INFORMATION STORAGE UNIT
- 115:: MEASURED DATA RECEIVING UNIT
- 116:: VARIATION CALCULATING UNIT
- 117:: FIRST PARAMETER CALCULATING UNIT
- 118:: SECOND PARAMETER CALCULATING UNIT
- 119:: FIRST VARIATION DETERMINING UNIT
- 120:: SECOND VARIATION DETERMINING UNIT
- 121:: THIRD VARIATION DETERMINING UNIT
- 122:: TYPE CLASSIFYING UNIT
- 123:: MAINTENANCE PLAN FORMULATING UNIT
- 124:: OUTPUT REQUEST RECEIVING UNIT
- 125:: MAINTENANCE PLAN DATA OUTPUT UNIT
- 130:: IN-VEHICLE COMPUTER
- 150:: RELAY DEVICE
- 170:: COMMUNICATION LINK
- 901:: HOST CONTROLLER
- 902:: CPU
- 903:: RAM
- 904:: GRAPHIC CONTROLLER
- 905:: DISPLAY DEVICE
- 906:: INPUT AND OUTPUT CONTROLLER
- 907:: COMMUNICATION INTERFACE
- 908:: HARD DISK DRIVE
- 909:: CD-ROM DRIVE
- 910:: ROM
- 911:: FLEXIBLE DISK DRIVE
- 912:: INPUT AND OUTPUT CHIP
- 991:: NETWORK COMMUNICATION DEVICE
- 992:: CD-ROM
- 993:: FLEXIBLE DISK

## Claims

1. A maintenance plan formulation system formulating a plan for maintaining an industrial machine used to conduct a specific operation, comprising:
first measuring means for measuring a value of information which varies by causing the industrial machine to operate for a specific job;
second measuring means for measuring a value of information which varies by causing the industrial machine to operate for a job other than the specific job; and
a maintenance plan formulation device that formulates a plan for maintaining the industrial machine on the basis of the values of information measured by the first measuring means and the second measuring means,
wherein the maintenance plan formulation device comprises:
a first parameter calculating unit that calculates a parameter indicating a degree to which the industrial machine has been operated for the specific job on the basis of the value of information measured by the first measuring means;
a second parameter calculating unit that calculates a parameter indicating a degree to which the industrial machine has been operated for a job other than the specific job on the basis of the value of information measured by the second measuring means;
a type classifying unit that classifies a tendency of a utilization form of the industrial machine into one type of a plurality of predetermined types on the basis of the parameters calculated by the first parameter calculating unit and the second parameter calculating unit; and
a maintenance plan formulating unit that formulates a plan for maintaining the industrial machine according to the type classified by the type classifying unit.

2. The maintenance plan formulation system according to Claim 1, wherein the first parameter calculating unit calculates a variation of the value per unit time as the parameter indicating the degree to which the industrial machine has been operated for the specific job on the basis of a period of time passing after the industrial machine is finally checked and a variation of the value measured by the first measuring means in the period of time.

3. The maintenance plan formulation system according to Claim 1, wherein the second parameter calculating unit calculates a variation of the value per unit time as the parameter indicating the degree to which the industrial machine has been operated for a job other than the specific job on the basis of a period of time passing after the industrial machine is finally checked and a variation of the value measured by the second measuring means in the period of time.

4. The maintenance plan formulation system according to Claim 1, wherein the type classifying unit classifies the tendency of the utilization form of the industrial machine into one type of a heavily-operating type in which a frequency of operation for the specific job is high and a lightly-operating type in which a frequency of operation for the job other than the specific job is high on the basis of the parameters calculated by the first parameter calculating unit and the second parameter calculating unit.

5. The maintenance plan formulation system according to Claim 4, wherein the type classifying unit classifies the tendency of the utilization of the utilization form of the industrial machine into the heavily-operating type when the parameter calculated by the first parameter calculating unit is equal to or more than a threshold value and the parameter calculated by the second parameter calculating unit is equal to or less than a threshold value.

6. The maintenance plan formulation system according to Claim 4, wherein the type classifying unit classifies the tendency of the utilization form of the industrial machine into the lightly-operating type when the parameter calculated by the first parameter calculating unit is equal to or less than a threshold value and the parameter calculated by the second parameter calculating unit is equal to or more than a threshold value.

7. The maintenance plan formulation system according to Claim 4, wherein the type classifying unit classifies the tendency of the utilization form of the industrial machine into one type of a highly-activated type in which both the frequency of operation for the specific job and the frequency of operation for the job other than the specific job are high and a low-activated type in which both the frequency of operation for the specific job and the frequency of operation of the job other than the specific job are low in addition to the heavily-operating type and the lightly-operating type on the basis of the parameters calculated by the first parameter calculating unit and the second parameter calculating unit.

8. The maintenance plan formulation system according to Claim 7, wherein the type classifying unit classifies the tendency of the utilization form of the industrial machine into the highly-activated type when the parameter calculated by the first parameter calculating unit is equal to or more than a threshold value and the parameter calculated by the second parameter calculating unit is equal to or more than a threshold value.

9. The maintenance plan formulation system according to Claim 7, wherein the type classifying unit classifies the tendency of the utilization form of the industrial machine into the low-activated type when the parameter calculated by the first parameter calculating unit is equal to or less than a threshold value and the parameter calculated by the second parameter calculating unit is equal to or less than a threshold value.

10. The maintenance plan formulation system according to Claim 1, wherein the maintenance plan formulating unit formulates a plan for the time to check the industrial machine according to the type classified by the type classifying unit.

11. The maintenance plan formulation system according to Claim 1, wherein the maintenance plan formulating unit formulates a plan for the cost to check the industrial machine according to the type classified by the type classifying unit.

12. The maintenance plan formulation system according to Claim 10, wherein the maintenance plan formulation device further comprises:
a first variation determining unit that determines whether the total variation of the value of information measured by the first measuring means after the industrial machine is finally checked is greater than a threshold value; and
a second variation determining unit that determines whether the total variation of the value of information measured by the second measuring means after the industrial machine is finally checked is greater than a threshold value,
wherein the maintenance plan formulating unit advances the time in the plan for the time to check the industrial machine when the first variation determining unit determines that the total variation is greater than the threshold value or the second determining unit determines that the total variation is greater than the threshold value.

13. The maintenance plan formulation system according to Claim 12, further comprising:
third measuring means for measuring a value of information which varies by activating the industrial machine,
wherein the maintenance plan formulation device further comprises:
a third variation determining unit that determines whether the total variation of the value of information measured by the third measuring means after the industrial machine is finally checked is greater than a threshold value, and
wherein the maintenance plan formulating unit advances the time in the plan for the time to check the industrial machine when the first variation determining unit determines that the total variation is greater than the threshold value, the second determining unit determines that the total variation is greater than the threshold value, or the third determining unit determines that the total variation is greater than the threshold value.

14. A maintenance plan formulation device formulating a plan for maintaining an industrial machine, comprising:
a first parameter calculating unit that calculates a parameter indicating a degree to which the industrial machine has been operated for a specific job on the basis of a value of information measured by first measuring means for measuring the value of information which varies by causing the industrial machine to operate for the specific job;
a second parameter calculating unit that calculates a parameter indicating a degree to which the industrial machine has been operated for a job other than the specific job on the basis of a value of information measured by second measuring means for measuring the value of information which varies by causing the industrial machine to operate for a job other than the specific job;
a type classifying unit that classifies a tendency of the utilization form of the industrial machine into one type of a plurality of predetermined types on the basis of the parameters calculated by the first parameter calculating unit and the second parameter calculating unit; and
a maintenance plan formulating unit that formulates a plan for maintaining the industrial machine according to the type classified by the type classifying unit.

15. A control method of controlling a maintenance plan formulation device formulating a plan for maintaining an industrial machine, comprising the steps of:
calculating a parameter indicating a degree to which the industrial machine has been operated for a specific job on the basis of a value of information measured by first measuring means for measuring the value of information which varies by causing the industrial machine to operate for the specific job;
calculating a parameter indicating a degree to which the industrial machine has been operated for a job other than the specific job on the basis of a value of information measured by second measuring means for measuring the value of information which varies by causing the industrial machine to operate for a job other than the specific job;
classifying a tendency of the utilization form of the industrial machine into one type of a plurality of predetermined types on the basis of the calculated parameters; and
formulating a plan for maintaining the industrial machine according to the classified type.

16. A computer-readable recording medium storing a computer program which causes a maintenance plan formulation device formulating a plan for maintaining an industrial machine to perform the steps of:
calculating a parameter indicating a degree to which the industrial machine has been operated for a specific job on the basis of a value of information measured by first measuring means for measuring the value of information which varies by causing the industrial machine to operate for the specific job;
calculating a parameter indicating a degree to which the industrial machine has been operated for a job other than the specific job on the basis of a value of information measured by second measuring means for measuring the value of information which varies by causing the industrial machine to operate for a job other than the specific job;
classifying a tendency of the utilization form of the industrial machine into one type of a plurality of predetermined types on the basis of the parameters calculated in the step of calculating the first parameter and the step of calculating the second parameter; and
formulating a plan for maintaining the industrial machine according to the classified type.
